# EUROPÄISCHE PATENTSCHRIFT

(11) **EP 1 670 872 B1**
(45) Veröffentlichungstag und Bekanntmachung des Hinweises auf die Patenterteilung: **19.09.2012**
(21) Anmeldenummer: 04787249.4
(22) Anmeldetag: 29.09.2004
(51) Int. Cl.: C09K 3/10, F16J 15/12

(54) **FLACHDICHTUNGSWERKSTOFF IN FORM EINER VERSTäRKTEN VERBUNDFOLLIE (COMPOSITE FILM)**
FLAT SEALING MATERIAL IN THE FORM OF A REINFORCED COMPOSITE FOIL (COMPOSITE FILM)
MATERIAU POUR JOINT PLAT SOUS FORME D'UN FILM COMPOSITE RENFORCE

(30) Priorität: 10.10.2003 DE 10347080
(43) Veröffentlichungstag der Anmeldung: 21.06.2006
(73) Patentinhaber: Frenzelit Werke GmbH, 95460 Bad Berneck i. F. (DE)
(72) Erfinder: ERB, Wilfried, 89231 Neu-Ulm (DE); ÜBELMESSER, Peter, 95445 Bayreuth (DE)
(74) Vertreter: Becker Kurig Straus
(86) Internationale Anmeldenummer: PCT/EP2004/052360
(87) Internationale Veröffentlichungsnummer: WO 2005/037948

(56) Entgegenhaltungen:
- EP-A- 1 006 237
- EP-B- 0 774 343
- DE-A1- 3 232 255
- DE-A1- 4 113 153
- DE-A1- 4 116 800
- DE-A1- 4 419 007
- DE-A1- 10 114 554
- DE-A1- 10 128 346
- DE-A1- 19 735 390
- DE-A1- 19 941 410

## Beschreibung

Die vorliegenden Erfindung betrifft einen unter Anwendungsbedingungen von bis zu 330°C thermisch stabilen Hochleistungs-Flachdichtungswerkstoff, der durch Verpressung von einer oder mehreren Faservliesen oder Faservliesmatten unter Druck und Temperatur zu einem so genannten composite film, d. h. zu einer (faser)verstärkten Folie unter Wärme und Druck konsolidiert wird. Der Flachdichtungswerkstoff eignet sich zur Verwendung für hoch beanspruchte Dichtungen und insbesondere für Zylinderkopfdichtung. Der erzeugte composite film bzw. die (faser- und/oder binder-)verstärkte Folie weisen Schichtdicken von 0,01 mm bis 3 mm auf, welche in einem Arbeitsgang aus einer oder mehreren Vlieslagen realisiert werden können. Somit können mit diesen erfindungsgemäßen Werkstoffen erstmalig Minimalschichtdicken von 0,01 mm erzielt werden.

Die vorliegende Erfindung betritt daher auch Dichtungen, insbesondere Zylinderkopfdichtungen, die aus dem zuvor erwähnten neuartigen Flachdichtungswerkstoff, der gegebenenfalls auf ein flächiges Substrat aufgebracht sein kann, bestehen. Als Substrat kann ein Metallsubstrat, wie ein Substrat aus Aluminium oder einer Aluminiumlegierung dienen. In besonderen Ausführungsformen der Erfindung kann aber auch ein Gewebe, ein Gestrick, Papiere oder (keramische) Platten als Substrat dienen. Der Flachdichtungswerkstoff kann dann in einer weiteren Ausführungsform zwischen zwei Substraten, beispielsweise zwei Geweben angeordnet und unter Druck und erhöhter Temperatur konsolidiert worden sein. In einer weiteren Ausführungsform können auch mehrere auf ein Substrat, beispielsweise ein Gewebe aufgebrachte Flachdichtungswerkstoffe, übereinander gestapelt und unter Druck und erhöhter Temperatur konsolidiert worden sein. Die Dichtung besteht dann aus einem Laminat mit Substraten und dazwischen gelagerten Flachdichtungswerkstoffen.

Im Stand der Technik dienen bei Dichtungen Beschichtungen oft nicht nur lediglich dazu, die beschichteten Materialien gegen Medieneinflüsse oder Ähnliches zu schützen, sondern auch dazu, die Abdichtungseigenschaften der Dichtung zu verbessern. Dazu muss eine hohe Anpassungsfähigkeit der Beschichtung an die abzudichtenden Gegenflächen geschaffen werden, um so Unebenheiten etc. auszugleichen. Weiterhin muss die Beschichtung gleichzeitig eine gewisse Rückfederung aufweisen, um dynamische Bauteilschwingungen auszugleichen. Sofern sie nicht durch Rückfederung des Dichtungswerkstoffes oder bei Metalldichtungen der Sickenelemente in der Dichtung ausreichend gegeben ist, kommt der Beschichtung eine entscheidende Abdichtungsfunktion zu.

Bei bestimmten Anforderungsprofilen sind zusätzlich gute Dauergleiteigenschaften der Beschichtung und ein geringes Setzverhalten unter Einfluss von Druck und Temperatur gefordert. Gute Dauergleiteigenschaften sind gekoppelt an dauerhaft beständige Oberflächen mit geringstem Verschleiß.

Ein Beispiel einer Dichtung, welche sowohl gute Dauergleiteigenschaften als auch hohe Anpassungsfähigkeit an die abzudichtenden Gegenflächen aufweisen sollte, ist die Zylinderkopfdichtung. Bislang werden Zylinderkopfdichtungen üblicherweise mit einer dünnen Beschichtung von einigen um-Dicke versehen, welche die Anpassungsfähigkeit der Dichtung an Unebenheiten und Rauhigkeiten der abzudichtenden Gegenflächen wie Motorblock und Zylinderkopf verbessern sollen. Solche Beschichtungen sind üblicherweise Beschichtungen aus Kautschuk, welche bei Metalldichtungen auf das metallische Substrat aufgetragen werden und weisen üblicherweise eine Dicke von etwa 20 µm auf. Ein derartiger Aufbau, d. h., ein metallisches mit einer Fluorkautschukbeschichtung versehenes Substrat stellt den zurzeit üblichen Aufbau einer so genannten MLS (multi-layer-steel)-Zylinderkopfdichtung dar. Ein großer Schwachpunkt von Fluorkautschukbeschichtungen ist dabei der hohe Reibungskoeffizient der Fluorkautschukbeschichtung zu den Dichtflächen, die relativ geringe Haftung der Beschichtung auf dem Stahlsubstrat, die relativ große Abhängigkeit der Standfestigkeit von der Betriebstemperatur und der Wärmestabilität und die damit einhergehende niedrige Verschleißbeständigkeit der Beschichtung.

DE 199 41 410 Al beschreibt nun eine Beschichtung zum Aufbringen auf ein Metallsubstrat, welche wenigstens einen thermoplastischen Fluorkunststoff umfasst und deren Härte von der zum Aufbringen auf das Substrat bestimmten ersten Schicht in Richtung auf die vom Substrat abgelegene äußerste Beschichtungslage hin abnimmt. Der Härtegradient kann durch Zusatz von Füll- oder Verstärkungsstoffen oder durch Zusatz wenigstens eines thermoplastischen Kunststoffes erreicht werden.

Das in DE 199 41 410 A1 beschriebene Beschichtungsverfahren führt zu den im Handel erhältlichen Zylinderkopfdichtungen mit der Bezeichnung "monomet®", die inzwischen für alle Motortypen z. B. Open Deck, Closed Deck, Otto, Diesel, Aluminium, Grauguss angeboten werden. Die Zylinderkopfdichtung "Monomet®" aus Stahl oder Aluminium liefert insbesondere auch bei Motoren für extreme Anforderungen signifikant reduzierte Ölverbräuche, und zwar nicht nur im Neuzustand. Die "Monomet®"-Zylinderkopfdichtung kann aber auch mit einer dauerhaften Mehrlagen-Kunststoff-Pulverbeschichtung versehen sein, die unter extremen Belastungen weitgehend ihre Eigenschaften beibehält. Mit dieser "multi-slide"(Pulver)-Beschichtung von insbesondere Zylinderkopfdichtungen sollen allerdings nunmehr Anwendungen möglich sein, die bisher dem Einsatz von dauerhaften Kunststoffbeschichtungen verschlossen waren. Sie verbindet die positiven Eigenschaften des PEEK-Polymers mit denen von PTFE. Der Werkstoff PEEK sorgt dabei für hohe Standfestigkeit, gute Verschleißbeständigkeit relativ hohe thermische Stabilität und niedrige Gleitreibung.

Zunächst wurde, wie gesagt, die "multi-slide"-Beschichtung für die Metall-Zylinderkopfdichtungen wie z. B. "Monomet^{®}" entwickelt. Dies hat eine zentrale Bedeutung sowohl für die Abdichtfunktion als auch für die Laufeigenschaften des Motors. Bei dem "multi-slide"-Verfahren wird eine Mehrlagenbeschichtung aus unterschiedlichen Kunststoffen als Pulver aufgetragen und danach gesintert.

Insgesamt erreicht man aber mit dieser Technik eine minimale Gesamtschitdicke der "multi-slide"-Beschichtung von ca. 60 µm. Die Anpassungsfähigkeit der "multi-slide"-Beschichtung wird durch einen hohen Anteil von PTFE oder PFA erreicht. Eine gute Haftung der Beschichtung zum Substrat wird durch einen hohen Anteil eines Hochtemperaturthermoplasten, wie z. B. PEEK erzielt.

Wünschenswert ist aber auch, wie dies bereits in der DE 199 41 410 Al angesprochen ist, einen Übergang, d. h. einen Gradienten von einem hohen PEEK-Anteil zu einem hohen Fluorthermoplast-Anteil zu erzielen. Dies wird durch einen Mehrschichtaufbau von z. B. zehn Schichten ("multi-slide") erreicht. Bei einer Gesamtdicke der Beschichtung von ca. 60 µm bedeutet dies allerdings eine Einzelschichtdicke von ca. 6 µm.

Eine Faserverstärkung der zuvor beschriebenen "multi-slide"-Beschichtungen ist in der Praxis nicht vorstellbar, weil übliche Faserdurchmesser z. B. bei Carbonfasern im Bereich von 7 µm und bei Glasfasern im Bereich von zwischen 6 und 9 µm liegen. Organische Fasern sind in der Regel noch wesentlich dicker und liegen bei Durchmessern von 12 bis 25 µm. Die Einzelschichtdicke kann aber, wie bereits oben festgestellt wurde, nur 6 µm betragen. Weiterhin ist zu berücksichtigen, dass jede einzelne Schicht bei dem oben beschriebenen "multi-slide"-Verfahren einzeln "gesintert" oder konsolidiert wird. Das Aufschmelzen des PEEK-Pulvers bei 380 °C führt aber zu einer starken Beanspruchung des Polymers und teilweise schon zu einem Abbau.

Insgesamt ist die "multi-slide"-Beschichtung als Kombination der Werkstoffe PEEK mit PTFE sicherlich daher ein neuer Weg, um den zunehmenden Temperaturen und der höheren Leistungsdichte moderner Motoren zu begegnen. Um diesen erhöhten Anforderungen an den Dichtungswerkstoff wirklich gerecht zu werden und wirtschaftlich zu produzieren, benötigt man aber ein Produkt, das bessere Eigenschaften und niedrigere Prozesskosten bringt als das "multi-slide" Verfahren.

Im Stand der Technik ist die Vliesstoffherstellung mit dem Nassverfahren in von der Papierherstellung abgeleiteten typischen Verfahrensweisen bekannt. In "Vliesstoffe", Viley-VCH, Viley-VCH-Verlag Weinheim 2000 ab Seite 235 ff ist ein derartiges Verfahren beschrieben. Das Verfahren wird dabei so durchgeführt, dass die Fasern in Wasser dispergiert werden, dass dann eine kontinuierliche Vliesbildung auf einem Siebband durch Filtration erfolgt und anschließend eine Verfestigung, Trocknung und Aufrollung der gebildeten Vliesbahn vorgenommen wird.

Derartige Verfahren werden im Wesentlichen für die Papierherstellung wie z. B. bei Synthesefaserpapier, Teebeutelpapier, Luftfilterpapier oder auch bei Zigarettenumhüllungspapieren eingesetzt.

Das Verfahren des Standes der Technik wird somit nur für die Herstellung von Spezialpapieren oder speziellen technischen Vliesstoffen als Endprodukt angewandt.

Aus EP 774 343 B1 sind weiterhin Formteile, insbesondere zur Verwendung als Fahrzeuginnenverkleidung bekannt, die aus Schmelzfasern und Verstärkungsfasern gebildet worden sind. In EP 774 343 B1 wird ein Formteil offenbart, das aus einer Kernschicht und einer Art Deckschicht besteht, wobei die Kernschicht aus Schmelzfasern und Verstärkungsfasern in einem entsprechenden Presswerkzeug unter Zufuhr von Wärme und Druck gebildet worden ist. Die Schmelzfasern können aus Ethylen, Polyethylen, Polyamid, Polypropylen, Polyvinylchlorid, Polystyrol, Polyamid oder einem anderen thermoplastischen Material oder Kombination dieser Materialien gebildet sein. Die Verstärkungsfasern können Kunststoff, Natur-, Glas-, Metallfasern oder eine Kombination dieser Fasern sein. Das in der EP 774 343 B1 offenbarte Formteil ist jedoch nur für Fahrzeuginnenverkleidungen, z. B. als Seitenverkleidungen, Hutablagen oder dergleichen geeignet und besitzt ungenügende Eigenschaften in Bezug auf die Dichte und Festigkeit und ist somit in der Anwendbarkeit auf die vorgenannten Anwendungen beschränkt.

Die DE 41 16 800 A1 beschreibt ein Hochtemperatur-Verfahren zur Herstellung von flächigen Verbundwerkstoffen mit Thermoplastmatrix, wobei die Verstärkungsfaser-Gebilde und die Thermoplasten einer Presse zugeführt werden, in dieser Presse die Temperatur der Materialien erhöht und das Verstärkungsfaser-Gebilde bei kurzer Verweilzeit mit genau definierter Maximalverweilzeit der einzelnen Volumenelemente unter Anwendung von Druck und hoher Temperatur imprägniert wird, wobei man auf einem außergewöhnlich hohen Temperaturniveau arbeitet, das ansonsten erfahrungsgemäß zu Schädigungen des Thermoplasten selbst oder der Schlichten an der Oberfläche der Verstärkungsfasern oder durch Abbau des Thermoplasten in der Grenzschicht zur Faser unter dem Einfluss der Schlichten führt.

In der DE 101 14 554 Al wird ein Verfahren zur Herstellung eines thermoplastisch verformbaren, faserverstärkten Halbzeugs auf Basis von Polyetherimiden beschrieben. Die Erfindung betrifft ein kontinuierliches Verfahren zur Herstellung von thermoplastisch verformbarem Halbzeug aus einem Polyetherimid und Verstärkungsfasern. Es umfasst folgende Schritte:
A. PEI-Fasern und Verstärkungsfasern werden trocken zu einem Mischvlies vermischt,
B. das Mischvlies wird durch Nadeln verfestigt,
C. das verfestigte Mischvlies wird erwärmt und
D. zum Halbzeug verpresst.

Die DE 101 28 346 Al beschreibt eine Flachdichtung und ein Verfahren zu ihrer Herstellung, wobei die Flachdichtung aus mindestens einer Vliesstoffschicht besteht, die aus einem Flächengebilde aus asbestfreien Fasern oder Fasergemischen besteht und mit einem Polymer imprägniert ist, wobei das Dichtelement wenigstens aus einem mit Polytetrafluorethylen imprägnierten Vliesstoff besteht.

Die DE 44 19 007 C2 beschreibt ein Verfahren zur Herstellung einer imprägnierten Flachdichtung aus einem faserartigen Prepreg, bei dem man ein in sich verfestigtes Faserflächengebilde mit vorvernetzbaren Lösungen, Dispersionen oder Suspensionen einer reaktiven Polymermischung tränkt, anschließend deren Vorvemetzung durch Trocknung bei erhöhter Temperatur einleitet und zuletzt die Polymeren in der oder den entstandenen Prepreg-Dichtungsbahn(en) unter Druck und erhöhter Temperatur, gegebenenfalls zusammen mit einer metallischen Verstärkung, endvernetzt, dadurch gekennzeichnet, dass man mindestens einen mit Bindemittel verfestigten, aus asbestfreien Fasern organischen oder anorganischen Ursprungs bestehenden Vliesstoff als Bahn mit der vorvernetzbaren Polymerenmischung tränkt, die getränkte(n) Faservliesstoffbahn(en) danach durch zwei Abquetschwalzen laufen lässt, anschließend in einem Trockenofen die Lösungs-, Dispersions- oder Suspensionsmittel bis zur Trocknung und Vorvernetzung der Polymerenmischung entfernt, sodann die entstandenen Vliesstoff-Prepreg-Bahnen in gewünschter Anzahl unter Druck und einer Wärmeeinwirkung, die ausreicht, um die Endvemetzung der Polymeren zu bewirken, miteinander zum Dichtungsmaterial laminiert und verklebt, woran sich das Ausstanzen der fertigen Dichtung anschließt.

Schließlich beschreibt die DE 32 32 255 Al ein asbestfreies, d. h. unter Verwendung von Asbestersatzstoffen hergestelltes Weichstoffflachdichtungsmaterial, insbesondere für die Herstellung von hoch beanspruchbaren Flachdichtungen. Es besteht aus einem Faservlies mit mindestens drei verschiedenen Faserarten sowie Füllstoffen und Bindemitteln. Das Faservlies enthält insgesamt 15 bis 60 % Faseranteil mit 5 bis 40 % organischer Synthesefaser, 5 bis 25 % Naturfaser und 35 bis 90 % Mineral- oder Metallfaser sowie 3 bis 15 % Bindemittel und 30 bis 70 % mineralischem Füllstoff. Die Kombination der verschiedenen Faserarten und Füllstoffe mit ihren unterschiedlichen Eigenschaften ergibt insgesamt ein Material, dessen technologische Eigenschaften zusammengefasst denen von Asbestmaterialien entsprechen. Durch die Verwendung der Faserarten und Füllstoffe mit den erfindungsgemäßen Mengenverhältnissen wird die leichte Herstellbarkeit von Faservliesen mit gewünschter Porosität, Verdichtung und Kompressibilität ermöglicht Aus den Faservliesen lassen sich so imprägnierte, hoch belastbare und asbestfreie Flachdichtungen für insbesondere den Einsatz in Verbrennungskraftmaschinen herstellen. Die in DE 32 32 255 Al eingesetzten Binder-Kautschuk-Systeme sind allerdings nur bis zu maximalen Anwendungsbedingungen von 200°C thermisch stabil, was einen großen Nachteil bedeutet.

Auch die DE 41 13 153 Al beschreibt eine asbestfreie Dichtung, welche für den Einsatz mit Dampf geeignet ist und bei Verwendung einen geringen Wasserverlust aufweist. Zur Herstellung der Dichtung wird eine Mischung aus p-Polyaramidpulpe mit m-Polyaramid-Wolle oder -Fibriden und/oder Polytetrafluorethylen-Pulver verwendet. Darüber hinaus können organische und/oder anorganische Füllstoffe sowie polymere Bindemittel zum Einsatz kommen. Die Faservliese, aus denen die Dichtungen gefertigt werden, werden mittels eines konventionellen Kalanderverfahrens hergestellt.

Die DE 197 35 390 Al beschreibt ein weiteres Beschichtungsmaterial für Dichtungen aus mindestens einer anorganischen und einer organischen Faser sowie einem Elastomer, welches beispielsweise ein Kautschuk sein kann, und Füllstoffen in bestimmten Mischungsverhältnissen, das beispielsweise durch Sprühen, Gießen, Walzen oder Siebdruck auf einen Träger aufgebracht werden kann. Die Beschichtung sowie die damit beschichteten Dichtungen weisen insbesondere bei hohen Temperaturen gute Eigenschaften auf.

Daher ist es Aufgabe der vorliegenden Erfindung, einen bei Anwendungsbedingungen von bis zu 330°C thermisch stabilen Hochleistungs-Flachdichtungswerkstoff mit hoher Festigkeit, guten Dämpfungseigenschaften, besten Gleit- und Verschleißeigenschaften und einstellbarer Dichte bereitzustellen, welcher für Dichtungsanwendungen und insbesondere Zylinderkopfdichtungsanwendungen geeignet ist.

Die obige Aufgabe wird durch den unter Anwendungsbedingungen von bis zu 330°C thermisch stabilen Hochleistungs-Flachdichtungswerkstoff in Form einer faser- und/oder binderverstärkten Verbundfolie (composite film) gelöst. Die erfindungsgemäße Verbundfolie weist eine Gesamtschichtdicke von 0,01 mm bis 3 mm auf und ist herstellbar durch Verpressung von wenigstens einem oder mehreren Faservliesen unter Druck und Temperatur, wobei die einzelnen Faservliese bzw. Faservliesmatten ein Flächengewicht von 8 bis 400 g/m², insbesondere von 50 bis 100g/m², aufweisen.

Die Faservliese enthalten die folgenden Komponenten:
(a) mindestens eine erste Faser aus einem Thermoplasten, ausgewählt aus der Gruppe, bestehend aus Polyetheretherketon (PEEK), Poly-p-phenylensufild (PPS), Polyetherimid (PEI), Polyetheramid (PEA), Polyamid (PA), Polysulfon (PSU), Polyvinylethersulfon (PPSU), Polyethersulfon (PES), Polyaryletherketon (PAEK), Polyetherketon (PEK), Polyoxymethylen (POM) und Gemischen davon, oder aus der Gruppe der metallischen Schmelzfasern mit einem Schmelz- oder Erweichungspunkt der Metallfasern von unter 450°C, als Schmelzfaser, in einem Gewichtsanteil von 30 bis 97 %, bezogen auf die gesamte Formulierung des Faservlieses, und einer mittleren Faserlängenverteilung der Schmelzfaser im Bereich von 0,1 mm bis 30 mm,
(b) gegebenenfalls mindestens eine zweite Verstärkungsfaser, ausgewählt aus der Gruppe, bestehend aus Glasfasern, Aramidfasern, Carbonfasern, Keramikfasern, oxidierten Polyphenylensulfid-(PPSO₂)-Fasern, Metallfasern, Polyimidfasern, Polybenzimidazolfasern, Polybenzoxazolfasern und Naturfasern und Gemischen davon, dessen Temperaturstabilität größer ist als die der Schmelzfaser, mit einem Gewichtsanteil von 3 bis 67 %, bezogen auf die gesamte Formulierung des Faservlieses und einer mittleren Faserlängenverteilung der verstärkungsfaser im Bereich von 0,1 mm bis 30 mm, mit der Maßgabe, dass die mittlere Faserlängenverteilung der Schmelzfaser kleiner ist als die der Verstärkungsfaser
(c) bis zu 60 Gewichtsprozent, insbesondere 3 bis 10 Gew.-%, eines Binders, bezogen auf die gesamte Formulierung des Faservlieses, wobei die Komponenten (a), (b) und (c) jeweils 100 Gew.-% ergeben.

Weiterhin können die Faservliese zusätzlich zu den 100 Gew.-% der Komponenten (a), (b) und (c) 0,1 bis 80 Gew.-Teile von üblichen Additiven und Zuschlagsstoffen enthalten, ausgewählt aus Fasern, Fibrillen, Fibriden, nanoskaligen Zusätzen im Größenbereich von 5 bis 300 nm, folienartigen Strukturen, Pulpe, metallischen oder keramischen Pulvern, anorganischen Mikrohohlkugeln mit einer durchschnittlichen Partikelgröße von 10 bis 300 µm und einer Druckfestigkeit von 3,5 bis 70 MPa und Mischungen hiervon.

In einer besonderen Ausführungsform der Erfindung werden Zusätze in Form von Fibriden eingesetzt.

Erstmalig ist es erfindungsgemäß möglich, langfaserverstärkte Folien (composite films) oder diese als Beschichtungen auf Substraten für die Anwendung als Flachdichtung, insbesondere als Zylinderkopfdichtung, in einem Arbeitsgang in Schichtdicken von 0,01 mm bis 3 mm aus wenigstens einer Vlieslage zu realisieren.

Der erfindungsgemäße Flachdichtungswerkstoff in Form einer faser- und/oder binderverstärkten Folie ist herstellbar durch Verpressung von mindestens einer Faservliesmatte unter Druck und erhöhter Temperatur. Der Verpressungsvorgang kann diskontinuierlich oder auch kontinuierlich erfolgen. Die Verpressung erfolgt erfindungsgemäß unter einem Druck von 0,05 bis 15 N/mm², einer Temperatur von bis zu 450 °C, d. h. einer Temperatur, die über dem Schmelzpunkt oder dem Erweichungspunkt der Schmelzfaser liegt. Die Verpressungszeiten liegen bei 0,1 bis 15 Minuten.

Erfindungsgemäß kann somit erstmalig durch den Einsatz von hoch präzisen Ausgangsvliesen, insbesondere aus PEEK oder PPS mit Carbonfaser oder Glasfaser oder organischen Hochleistungsfasern und zusätzlichen additiven Fasern in unterschiedlichen Mischungsverhältnissen, Verstärkungsfaseranteilen und Faserlängen von mindestens 0,1-30 mm eine faserverstärkte Folie mit einer Minimaldicke von 0,01 mm hergestellt werden. Die Konsolidierung der Vliese kann dabei in einer Ausführungsform direkt auch auf einem Substrat, insbesondere einem Stahlsubstrat oder einem Substrat aus Aluminium oder einer Aluminiumlegierung, erfolgen. Als weitere bevorzugte Substrate können Gewebe, Gestricke, Papiere oder keramische Platten dienen. In einer Ausführungsform der Erfindung wird das Faservlies auf einem Gewebe konsolidiert bzw. zwischen zwei Gewebe eingebracht und konsolidiert. Dabei handelt es sich um ein Verfahren, wodurch Vliese direkt auf das Substrat aufgebracht werden und z. B. in Taktpressen oder Doppelstahlbandpressen verpresst und der erfindungsgemäße Flachdichtungswerkstoff hergestellt wird. Die beheizten Pressen ermöglichen eine sowohl kontinuierliche als auch diskontinuierliche Herstellungsweise von Flachdichtungswerkstoffen oder Einzeldichtungen. Die Faservliesmatten aus den jeweiligen Werkstoffen können nacheinander auf das Substrat aufgebracht und konsolidiert werden. Somit ist es möglich, unterschiedliche Materialien miteinander zu kombinieren und auf diese Weise einen Gradientenwerkstoff herzustellen.

Weiterhin ist es in einer besonderen Ausführungsform möglich, wie schon oben beschrieben wurde, die faser- und/oder binderverstärkte Verbundfolie zwischen zwei Gewebesubstrate einzubringen. Falls nun mehrere auf ein Gewebesubstrat aufgebrachte Verbundfolien übereinander unter Wärme und Druck konsolidiert werden, so erhält man einen Flachdichtungsverbundwerkstoff mit mehreren zwischengelagerten Substraten bzw. Verbundfolien.

Erfindungsgemäß ist der Flachdichtungswerkstoff durch Verpressung von mindestens einer oder mehrerer, auch aus unterschiedlichen Materialien bestehenden, Faservliesmatten in einem beheizten Werkzeug unter einem Druck von 0,05 bis 15 N/mm² herstellbar. Die Faservliesmatten enthalten mindestens eine erste Faser aus einem Hochleistungsthermoplasten der einer metallischen Faser als Schmelzfaser mit einem Gewichtsanteil von 30 bis 97%, bezogen auf die gesamte Formulierung des Faservlieses, und mindestens einer zweiten Verstärkungsfaser aus einem Hochleistungswerkstoff, dessen Temperaturstabilität größer ist als die der Schmelzfaser, mit einem Gewichtsanteil von 3 bis 67 %, bezogen auf die gesamte Formulierung des Faservlieses, sowie bis zu 60 Gew.-%, bezogen auf die gesamte Formulierung des Faservlieses, insbesondere 3 bis 10 Gew.-%, bezogen auf die gesamte Formulierung des Foservlieses, eines Binders, wobei die Anteile der gesamten Formulierung der Faservliesmatte gewichtsbezogen sind, mit der Maßgabe, dass die Faserlänge der Schmelzfasern in der mittleren Häufigkeitsverteilung kleiner sind als die der Verstärkungsfasern.

Dadurch, dass die mittlere Verteilung der Faserlänge der Schmelzfaser kleiner ist als diejenige der Verstärkungsfaser, wird eine homogene Vermischung der beiden Faserarten erreicht, sodass dann beim späteren Weiterverarbeiten des Halbzeuges eine einheitliche homogene Verteilung der Verstärkungsfaser in dem Faserverbundwerkstoff erfolgt. Die Faserausrichtung der Fasern in der Schicht kann isotrop oder anisotrop sein.

Im erfindungsgemäßen Flachdichtungswerkstoff weist die mindestens eine Schmelzfaser eine mittlere Faserlängenverteilung im Bereich von 0,1 mm bis 30 mm auf. Bevorzugt ist die Schmelzfaser 2 mm bis 6 mm und ganz besonders bevorzugt 1,5 mm bis 3 mm lang. Die Verstärkungsfaser aus dem Hochleistungswerkstoff weist ebenfalls eine mittlere Faserlängenverteilung im Bereich von 0,1 mm bis 30 mm auf, ist aber, wie durch Patentanspruch 1 definiert wird, jeweils in ihrer mittleren Faserverteilung immer größer wie die Schmelzfaser. Geeignete Faserlängen für die Verstärkungsfasern sind 0,1 mm bis 18 mm, besonders bevorzugt 3 mm bis 12 mm.

Fasern aus einem Thermoplasten, ausgewählt aus der gruppe, bestehend aus Polyetheretherketon (PEEK), Poly-p-phenylensufild (PPS), Polyetherimid (PEI), Polyetheramid (PEA), Polyamid (PA), Polysulfon (PSU), Polyvinylethersulfon (PPSU), Polyethersulfon (PES), Polyaryletherketon (PAEK), Polyetherketon (PEK), Polyoxymethylen (POM) und Mischungen hiervon, und aus der Grüppe der metallischen Schmelzfasern, z. B. aus Zink, Blei, Bismut, oder deren Legierungen. Voraussetzung ist nur, dass der Schmelz- oder Erweichungspunkt der Metallfasern unter 450°C liegt.

Die Verstärkungsfasern (b) sind ausgewählt aus der Gruppe, bestehend aus Polybenzoxazol (PBO)-Fasem, Polyimid (PI)-Fasern, Polybenzimidazol (PBI)-Fasern, oxidierte Polyphenylensulfid (PPSO₂)-Fasern, Metallfasern, Glasfasern, Aramidfasern, Carbonfasern, Keramikfasern, Naturfasern und Mischungen hiervon.

Wie vorstehend bereits erläutert wurde, ist die erfindungsgemäß verwendete Faservliesmatte so aufgebaut, dass die einzelnen Fasern mit Hilfe eines Bindemittels untereinander fixiert sind. Die Fasern selbst sind dabei noch so vorhanden, wie sie eingesetzt worden sind und nur durch das Bindemittel miteinander verbunden. Dieser Aufbau der Faservliesmatte ist wichtig, da für den später herzustellenden Verbundwerkstoff ein Aufspreizen der Verstärkungsfasern und/oder eine inhomogene Mischung vermieden werden muss.

Bei den Bindemitteln (c) können gemäß der vorliegenden Erfindung solche eingesetzt werden auf Basis von Polyvinylalkohol (PVA), Polyvinylacetat (PVAC), Ethylenvinylacetat (EVA), Polyacrylat, Polyurethan (PUR), Polyaramid, Harzen, aus der Gruppe aus Melaminharz oder Phenolharz, Polyolefinen wie Polyethylen (PE), Polypropylen (PP) und Copolymeren hiervon.

Unter Aramidfasern werden im Zusammenhang der vorliegenden Erfindung solche nach DIN 60 001 Teil 3 (1988) verstanden, d. h. Chemiefasern aus synthetischen Polymeren mit aromatischen Kettengliedern, die zu mindestens 85% Massenanteil direkt durch Aramidgruppen zu linearen Makromolekülen verbunden sind und bei denen bis zu 50% der Amidbindungen durch Imidbindungen ersetzt sein können (vgl. Chemiefasern/Textilindustrie, Vol. 39/91, Dezember 1989, 1263, 1264).

Der Binder (c) kann eine Dispersion sein und faserartigen, folienartigen, fibrillenartigen oder fibridartigen Charakter aufweisen. Dabei werden unter Fibriden kurze hochaufgesplittete, nicht spinnfähige Fasern mit sehr großen Oberflächen verstanden. Einsetzbar sind sie z. B. aus Polyolefinen (PP, PE-HD) und können als Bindefasem z. B. zum Phenolharzersatz dienen (bzgl. der Definition der Fibride verweisen wir auf P. Steinau CTI 40/92 (1990) T 152/53; S. Oberhoffner, Technische Textilien 39 (1996) 57/58).

Die erfindungsgemäß verwendete Faservliesmatte kann selbstverständlich auch noch Additive (d) enthalten. Solche Additive können eingesetzt werden, um die Eigenschaften der Faservliesmatte und somit auch nachfolgend des mit der Faservliesmatte hergestellten Faserverbundwerkstoffes zu beeinflussen. Gemäß der vorliegenden Erfindung können deshalb Additive eingesetzt werden, die Eigenschaften wie elektrische Leitfähigkeit, Wärmeleitfähigkeit, Reibungsverhalten, Temperaturbeständigkeit, Schlagzähigkeit, Festigkeit oder die Abrasionsbeständigkeit beeinflussen. Derartige Additive können ebenfalls z. B. in Form von Fasern, Fibrillen, Fibriden, Folien oder Pulpen eingesetzt werden. Die Additive können sowohl metallische oder keramische wie auch organische Pulver sein.

Wesentlich ist nun, dass die erfindungsgemäß eingesetzte Faservliesmatte ein sehr geringes Flächengewicht besitzt. Darüber hinaus kennzeichnend ist die hohe Gleichmäßigkeit des Flächengebildes in Längs- und Querrichtung hinsichtlich der Dicke und Faserverteilung. Die Faservliesmatte weist je nach eingesetzten Verstärkungssfasern und Schmelzfasern und dessen Gewichtsanteile ein Flächengewicht von 8 bis 400 g/m², bevorzugt von 50 bis 100 g/m² auf und kann eine Dichte von 30 bis 500 kg/m³ für organische Faserstoffe, bevorzugt 100 bis 200 kg/m³ aufweisen. Für die Verwendung von metallischen Fasern kann die zuvor genannte Raumdichte weit überschritten werden. Die verwendete Faservliesmatte (als Vorprodukt zum composite film) ist bevorzugt 0,1 mm bis 30 mm, besonders bevorzugt 0,15 mm bis 1 mm dick. Die geringe Flächenmasse in großer Homogenität ermöglicht, dass beim späteren Verpressungsvorgang sehr dünne, auch langfaserverstärkte Folien (composite films) hergestellt werden können.

Die für die Herstellung der Flachdichtungswerkstoffe eingesetzte Faservliesmatte kann weiterhin so aufgebaut sein, dass auf mindestens einer Außenseite der Faservliesmatte ein flächiges Substrat aufgebracht ist. Die Faservliesmatte bildet dann damit eine Funktionsschicht im weiteren Verarbeitungsgang, d. h., wenn das Halbzeug zu einem Endprodukt verarbeitet wird, wobei diese Funktionsschicht bestimmte Funktionen, wie eine Leitfähigkeit oder auch eine spezielle Klebefunktion, übernimmt. Das flächige Substrat kann dabei in Form eines Metallsubstrates, Gewebes, Geleges, Papiers oder Vlieses ausgebildet sein.

Ein Verfahren zur Herstellung einer Faservliesmatte, wie sie vorstehend beschrieben ist, sieht vor, dass die Schmelzfaser, um die Verstärkungsfaser in einem Dispergiermittel, bevorzugt Wasser, dispergiert werden, und dass dann eine kontinuierliche Vliesbildung auf einem Siebband durch Filtration erfolgt und anschließend eine Verfestigung und Trocknung des Vlieses erfolgt. Das Bindemittel kann dabei während des Dispergierschrittes und/oder während der Vliesbildung zugesetzt werden.

Gleichfalls ist es möglich, die Additive während des Dispergierschrittes oder während der Vliesbildung zuzusetzen.

Erfindungsgemäß ist es möglich, einen Flachdichtungswerkstoff zu erzielen, dessen Dichte und Dicke sowohl durch die Dichte und Dicke, als auch durch die Rezeptur der eingesetzten Vliese als auch durch die Verpressungs- (Konsolidierungs-) Parameter gesteuert werden kann. Dadurch ist es nun möglich, Faserverbundwerkstoffe mit einer Dichte herzustellen, die zwischen 0,25 und 6 g/cm³ liegt. Die Dicke der erfindungsgemäß hergestellten faserverstärkten Folie liegt im Bereich zwischen 0,01 bis 3 mm. Durch die Auswahl der Vliesbildung, durch geeignete Wahl der Verfahrensparameter kann ein gradiertes Vlies erzeugt werden, d. h., es können Übergänge von hohem Anteil an z. B. PEEK zu einem hohen Anteil an Verstärkungsfasern, sowohl in einem Einschicht- als auch in einem Mehrschichtaufbau erzielt werden. Somit ist ein kontinuierlicher Konzentrationswechsel von hoch haftfähigem reinem PEEK zu einem optimal faserverstärkten (langfaserverstärkten) Thermoplastcompound möglich.

Ein Konzentrationsgefälle von z. B. PEEK oder PTFE kann auch durch ein einfaches Übereinanderlegen von Vlieslagen mit unterschiedlicher Konzentration der verschiedenen Mischungskomponenten erzeugt werden. Dabei hilft die faserige Oberfläche und Struktur der einzelnen Vlieslagen eine innige Verbindung (Verzahnung) zwischen den konsolidierten Schichten zu gewährleisten; eine Schichtentrennung (Delamination) kann dadurch vermieden werden. Dies führt darüber hinaus zu einer wesentlich verringerten Kriechneigung zwischen den Schichten und damit zu einer höheren Standfestigkeit

Durch die Auswahl der verschiedenen Vliese mit unterschiedlichen Werkstoffen, wie z. B. PEEK oder PTFE etc., kann ein Faserverbundwerkstoff mit gezielter Inhomogenität im Querschnitt, d. h. ein Gradientenwerkstoff hergestellt werden, der dann ebenso in der fertigen Dichtung vorliegt.

Durch die freie Wählbarkeit und der in engen Grenzen reproduzierbaren Flächenmasse der Ausgangsvliese können im konsolidierten Zustand Schichtstärken von minimal ca. 0,01 mm in einem Arbeitsgang aus einer Vlieslage realisiert werden; höhere Schichtstärken sind durch höheres Flächengewicht der Einzelvlieslage oder durch mehrfaches Übereinanderlegen der Einzelvlieslagen nahezu unbegrenzt erreichbar.

Dabei erfolgt die Konsolidierung in einem Schritt; mehrfache thermische Belastung des Hochtemperatur-Polymers wird dabei vermieden.

Die Langfaserverstärkung führt zu einem einstellbaren und genau definierbaren E-Modul, zur Optimierung von Festigkeit, Dämpfung, Verschleißverhalten, Reibungskoeffizient, Anpassungsvermögen, Elastizität, Kriech- und Fließeigenschaften des Metall-Kunststoffverbundes und damit des composite-films.

Darüber hinaus werden die o. a. Eigenschaften ebenfalls über die Art der Additive beeinflusst. Additive im Sinne der Erfindung sind dabei sowohl Bindersysteme als auch weitere Faser-, Pulver- oder nanoskalige Zuschlagstoffe unter anderem auch aus der Gruppe der traditionellen Gleitmittel und Gleitlagerwerkstoffe.

Additive können weiterhin auch Microspheres (Mikrohohlkugeln) sein, die zu einer gezielten Einstellung der Dichte und damit der Kompressibilität führen können. Die Mikrohohlkugeln sind insbesondere anorganische Mikrohohlkugeln mit einer durchschnittlichen Partikelgröße von 10 bis 300 µm und einer Druckfestigkeit von 3,5 bis 70 MPa, insbesondere einer Druckfestigkeit von etwa 40 MPa.

Erfindungsgemäß können die angeführten Additive zusätzlich in einem separaten Arbeitsgang z. B. Sprühen, Tiefdruck, Siebdruck, und damit örtlich begrenzt auf den Composite film aufgebracht werden. Durch Konsolidierungsparameter und Rezeptur ist die Porosität und damit die Dichte und Kompressibilität des Endproduktes (composite film) steuer- und reproduzierbar. Auch dies beeinflusst insbesondere Eigenschaften wie die Anpassungsfähigkeit des gesamten Systems. Die Konsolidierung kann dabei in einem kontinuierlichen Prozess zu homogenen Dichten oder durch strukturierte Pressflächen zu beliebigen topografischen Oberflächen und damit zu örtlich unterschiedlicher Dichte (und damit Kompressibilität) führen.

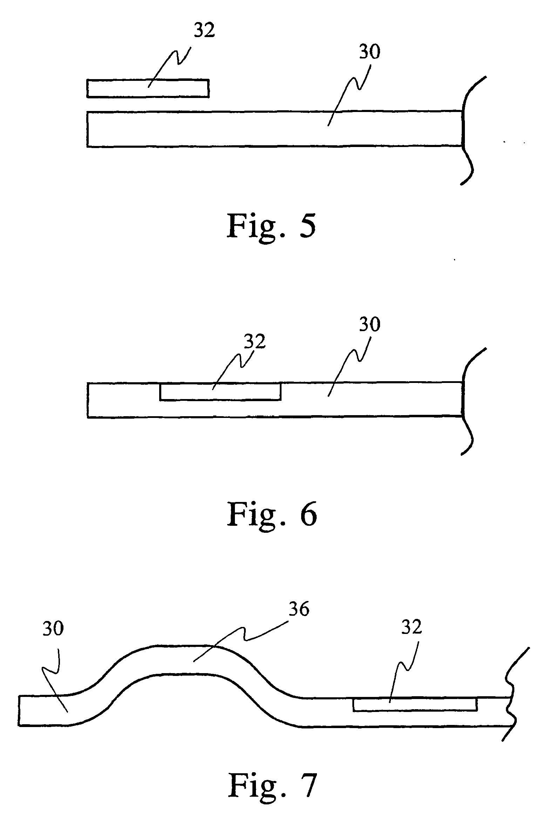

Die Erfindung betrifft daher auch eine Dichtung, die aus dem oben beschriebenen Flachdichtungswerkstoff hergestellt ist und in einer besonderen Ausführungsform auf ein flächiges Substrat, insbesondere ein metallisches Substrat, wie ein Stahlsubstrat, oder ein gewebe oder gestrick, oder Papier oder eine Platte, aufgebracht ist. Die erfindungsgemäße Dichtung kann eine örtlich unterschiedliche Dicke bzw. eine örtlich unterschiedliche topografische Oberfläche, d. h. eine Dicke aufweisen. Sie weist somit eine örtlich unterschiedliche Dichte und damit eine örtliche unterschiedliche Elastizität und Plastizität auf. Diese unterschiedliche Elastizität und Plastizität kann zum einen durch Auswahl der verschiedenen Vliesmatten, aus denen der Dichtungswerkstoff hergestellt ist, aber auch durch partielle sektorale, d. h. örtlich unterschiedliche Pressung erzielt werden (vgl. dazu weiter unten Fig.6 bis Fig. 9).

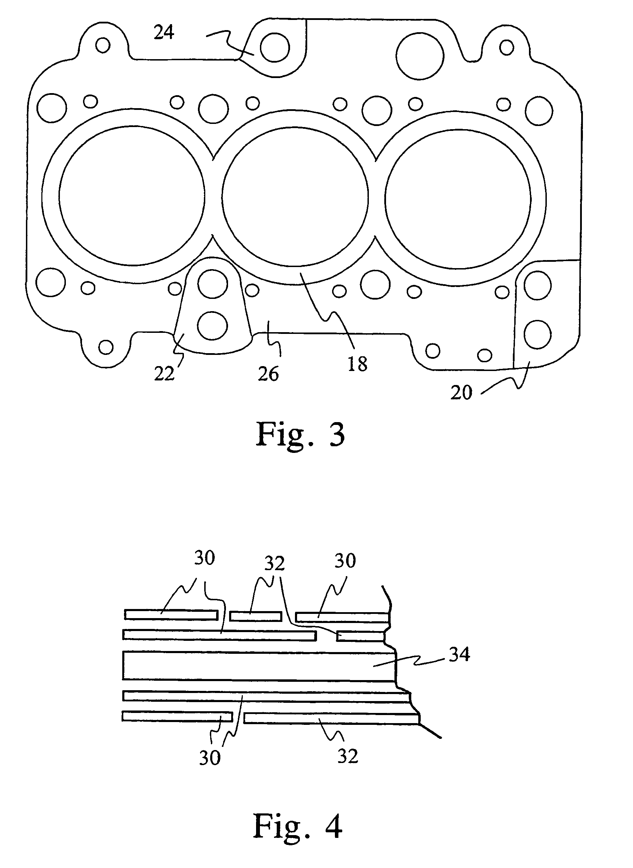

Wie bereits zuvor ausgeführt wurde, kann eine unterschiedliche Elastizität und Plastizität durch unterschiedliche Faser- und Füllstoffgehalte innerhalb der Dichtflächen eingestellt werden. Diese unterschiedliche Elastizität und Plastizität kann in einer besonderen Ausführungsform der Erfindung über die Dichtfläche verteilt sein und durch mosaikartigen Zusammenbau von Werkstoffen unterschiedlicher Plastizität und Elastizität erreicht werden (vgl. weiter unten Fig. 4 bis Fig. 7 sowie Fig. 10 und Fig. 11).

Die erfindungsgemäße Dichtung kann ebenfalls in einer anderen Ausführungsform eingelegte Elastomerteile, keramische Werkstoffe sowie auch metallische Werkstoffe enthalten. Es handelt sich dabei um Sickenringe, aufgelegte oder eingelegte Blechringe, ungesickte Blechringe, um gesinterte oder ungesinterte Metallringe oder um gebördelte oder ungebördelte Einfassungen.

In einer anderen Ausführungsform der Erfindung ist es möglich, dass die lokal eingestellte unterschiedliche Elastizität und Plastizität, die durch örtlich unterschiedliche Verpressungsdrücke erreicht wird, nicht durch scharfe Übergänge, sondern durch weiche Übergänge gekennzeichnet ist.

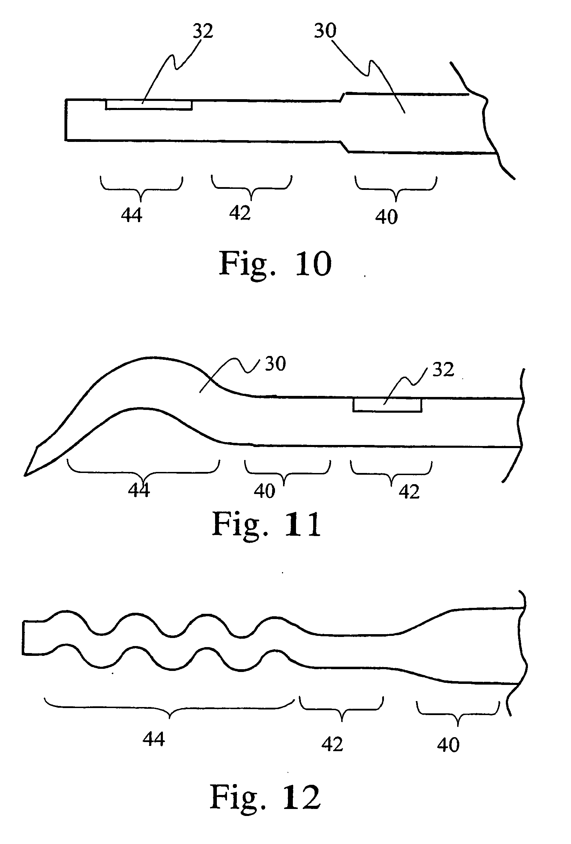

In einer anderen Ausführungsform kann die Dichtung eine durch Formpressen erzeugte Dichtungsgeometrie aufweisen. Dabei kann die Dichtung jede bekannte Dichtungsgeometrie aufweisen, wie sie heute beispielsweise schon für Elastomerdichtungen, für Metallsickendichtungen oder für trägerlose Dichtungen verwendet wird (vgl. Figuren 10-15).

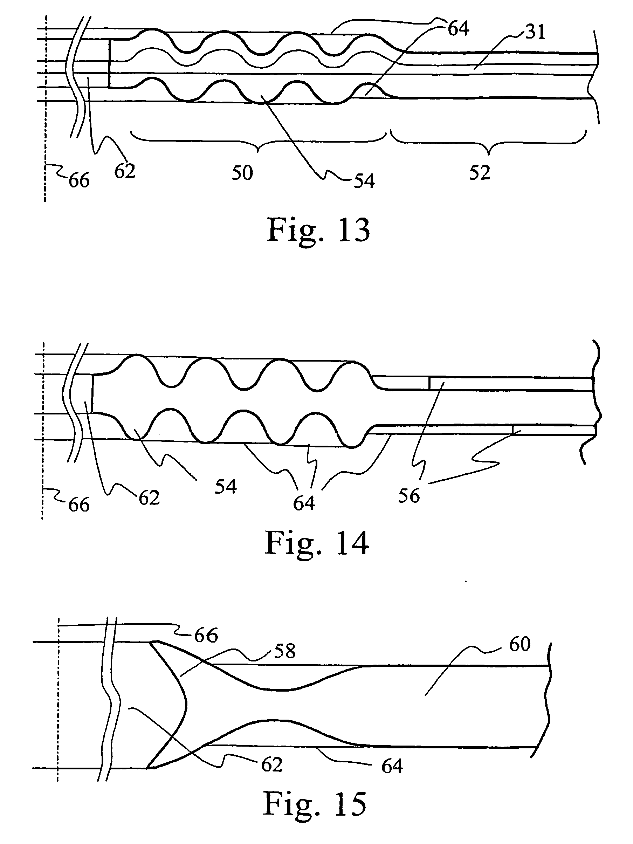

In einer weiteren Ausführungsform kann die durch Formpressen erzeugte Dichtungsgeometrie ein Kammprofil aufweisen. Dabei ist die Dichtung in einem Bereich durch in Reihen hintereinander angeordneter Dichtflächen ausgeführt. Die Dichtflächen bilden dabei im Schnitt eine kammartige Struktur. Verschiedene Ausführungen derartiger Kammprofile sind beispielsweise in den Figuren 13 bis 15 dargestellt.

Die Erfindung wird nachfolgend anhand von Beispielen und Figuren näher beschrieben, ohne sie darauf einzuschränken.
Figur 1 zeigt einen Querschnitt eines erfindungsgemäßen konsolidierten Präzisionsvlieses mit PEEK als Schmelzfaser, konsolidiert auf Stahlblech mit einer nahezu optimalen Dichte und nahezu keiner Porosität
Figur 2 zeigt eine Raster-Elektronenmikroskop-(REM)-Aufnahme eines Bruchbildes einer erfindungsgemäßen konsolidierten Vliesmatte mit PPS als Schmelzfaser und Carbonfaser als Verstärkung mit einer relativ hohen Porosität und einer Dichte von 1,23 g/cm³.
Figur 3 zeigt eine Draufsicht auf eine erfindungsgemäße Zylinderkopfdichtung, die aus dem Flachdichtüngswerkstoff nach der Erfindung geformt ist.
Figuren 4 bis 7 und 10 bis 11 zeigen Schnittansichten von verschiedenen Ausführungsformen von erfindungsgemäßen Dichtungen, bei denen durch mosaikartigen Zusammenbau von Werkstoffen eine unterschiedliche Elastizität und Plastizität erreicht wird.
Figuren 8 und 9 zeigen eine Seitenansicht einer erfindungsgemäßen Dichtung, bei der die unterschiedlichen Elastizitäten und Plastizitäten durch topografisch gestaltete Pressplatten oder partielle, sektorale Pressungen erreicht werden.
Figuren 11 bis 15 zeigen Schnittansichten der erfindungsgemäßen Dichtung mit unterschied lichen Ausprägungen für Formpressungen.
Figur 16 zeigt eine,Aufsicht auf eine HD-Variante (high-density-Variante) (100% Dichte ≈ 1,4 g/cm³) von Beispiel 3 (erfindungsgemäß) (75 Gew.-% PEEK, 20 Gew.% Polyaramidfaser, 5 Gew.-% Binder) in der Aufsicht (40-fach, Lichtmikroskop).
Figur 17 zeigt eine Aufsicht auf den erfindungsgemäßen Flachdichtungswerkstoff in der LD-Variante (low-density-Variante) (ca. 65% Dichte, d. h. 0,9 g/cm³) von Beispiel 3 (erfindungsgemäß) (75 Gew.-% PEEK, 20 Gew.-% Polyaramidfaser, 5 Gew.-% Binder) in der Aufsicht (40-fach, Lichtmikroskop).
Figur 18 zeigt Verformungskurven bei 250°C und einer Stegbreite von 0,85 mm von composite films gemäß der Erfindung auf Stahlblech beschichtet und deren Abhängigkeit von der Materialdichte am Beispiel der Zusammensetzung von Beispiel 3, jeweils der HD-Version und der LD-Version.
Figur 19 zeigt exemplarisch die Beeinflussung der Leckagerate durch Dichtevariation bei Beispiel 3 gemäß der Erfindung in der LD-Version (0,9 g/cm³) sowie in der HD-Version (1,4 g/cm³).

Das erfindungsgemäße Dichtungsmaterial mit der einzigartigen Dichtungsstruktur und den einzigartigen Eigenschaften wird üblicherweise durch eine Vliesstoffherstellung mit einem Nassverfahren in den von der Papierherstellung abgeleiteten typischen Verfahrensweisen hergestellt. Aus den Faservliesmatten wird dann unter Anwendung von Druck und Temperatur ein Dichtungswerkstoff hergestellt, der dann zur endgültigen Dichtung, insbesondere zu einer Zylinderkopfdichtung, weiterverarbeitet wird.

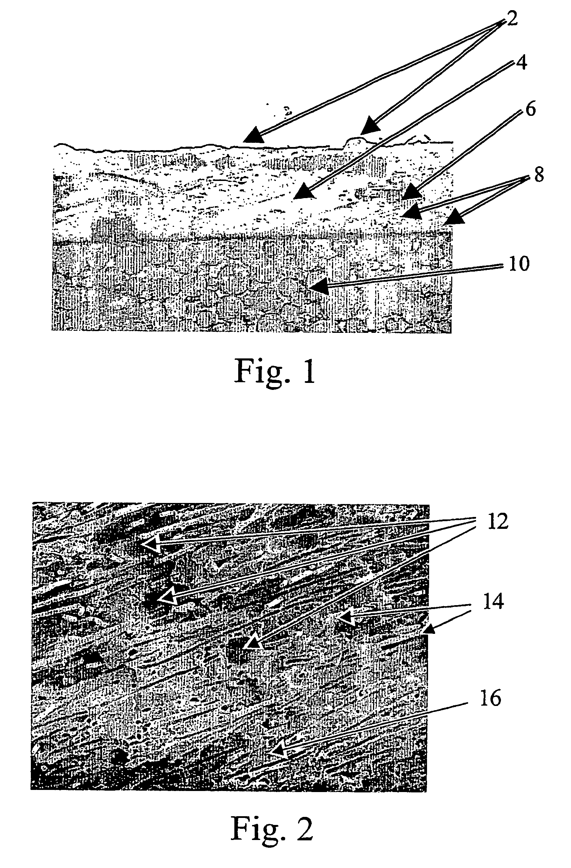

Figur 1 zeigt einen Querschnitt eines erfindungsgemäßen konsolidierten Präzisionsvlieses mit PEEK als Schmelzfaser, konsolidiert auf Stahlblech mit einer nahezu optimalen Dichte und nahezu keiner Porosität. Das Bezugszeichen 2 bezeichnet die Grenzfläche zu einem Stahlsubstrat. Auf dem Stahlsubstrat ist ein Hochleistungsthermoplast 4 aufgebracht. In dem Hochleistungsthermoplasten 4 sind Additive 6 eingebracht. In dem Hochleistungsthermoplasten 4 sind ebenfalls Carbonfasern 8 eingebracht. Am unteren Rand des Schnittbildes ist noch ein Einbettungsmittel 10 zu erkennen.

Figur 2 zeigt eine Raster-Elektronenmikroskop-(REM)-Aufnahme eines Bruchbilds einer erfindungsgemäßen konsolidierten Vliesmatte mit PPSO₂ als Schmelzfaser und Carbonfaser als Verstärkungsfaser. Die Vliesmatte zeigt eine relativ hohe Porosität und eine Dichte von 1,23 g/cm3. In der Aufnahme sind die Poren mit dem Bezugszeichen 12 gekennzeichnet. Die E-Glas Verstärkungsfasern sind bei 14 zu erkennen und in den Hochleistungsthermoplasten 16 eingebettet.

In Figur 3 wird beispielsweise eine typische erfindungsgemäße Zylinderkopfdichtung in Draufsicht gezeigt, die aus dem Flachdichtungswerkstoff nach der Erfindung geformt ist. Das Bezugszeichen 18 gibt dabei eine Zone mit höherer Dichte und höherer Federsteifigkeit und geringer Kompressibilität an. Die Zone, die mit Bezugszeichen 26 bezeichnet ist, weist eine niedrigere Dichte als die der Zone 18, niedrigere Federsteifigkeit und höhere Kompressibilität und höhere Rückfederung auf.

Die Zonen 20, 22 und 24 in Fig. 3 weisen eine mittlere Dichte und mittlere Federsteifigkeit, mittlere Kompressibilität und mittlere Rückfederung auf.

In den Figuren 4 bis 7 bezeichnen Bezugszeichen 30, 32 und 34 unterschiedliche Bereiche der erfindungsgemäßen Dichtung, die durch den mosaikartigen Zusammenbau der jeweiligen Werkstoffe 30, 32 und 34 erreicht wird.

In Figur 4 ist ein Schichtaufbau einer Dichtung auf einem Substrat 34 dargestellt. Auf dem Substrat 34 sind Lagen 30, 32 mit verschiedenen Dichten, Elastizitätsmodulen und Rückfederungseigenschaften dargestellt. Dabei ist auf dem durchgehenden Substrat 34 eine Anzahl von jeweils mosaikartig zusammengesetzten Schichten übereinander gelegt. Damit kann ein beliebig gestalteter Aufbau einer Dichtung erhalten werden. Die Dichtung der vorliegenden Erfindung ist dabei nicht auf eine Substratlage 34 angewiesen. Die Dichtung der vorliegenden Erfindung ist ebenfalls nicht auf eine bestimmte Anzahl von verschiedenen Lagen 30, 32 beschränkt. Hier und im Folgenden sei angenommen, dass die Lage 30 eine Lage mit hoher Dichte, und dass die Lage 32 eine Lage mit geringerer Dichte ist. Die Darstellung in Figur 4 zeigt das Verschachtelungsprinzip in Mosaikform, vor der Konsolidierung der Vliese. In Figur 4 ist das Mosaik sowohl in der Aufsicht (nicht gezeigt) als auch in der Schnittansicht deutlich zu erkennen.

In Figur 5 ist die Dichtung auf zwei Dichtungslagen 32 und 30 beschränkt, wobei die Dichtungslage 32 auf die durchgehende Dichtungslage 30 aufgesetzt ist. Die Darstellung in Figur 5 zeigt ein einfaches Auflegen vor der Konsolidierung der Vliese. In Figur 5 ist eine mosaikartige Struktur nur in der Aufsicht (nicht gezeigt) zu erkennen.

In Figur 6 ist die Dichtung ebenfalls auf zwei Dichtungslagen 32 und 30 beschränkt. Die dargestellte Struktur kann durch Verpressen einer in Figur 5 dargestellten Dichtungsstruktur erreicht werden. Die dargestellte Struktur kann auch durch eine mosaikartige Zusammenlegung der Lagen 30 und 32 auf einer Lage 30 entsprechend Figur 6 hergestellt werden.

Figur 7 stellt im Wesentlichen die in Fig. 6 dargestellte Dichtungsstruktur dar, die in einem Bereich mit einer Sicke 36 versehen ist, um eine höhere Elastizität zu erreichen.

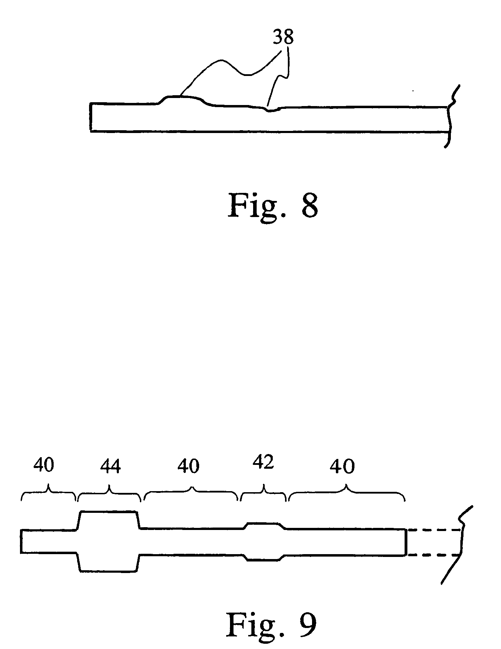

In den Figuren 8 und 9 wird die unterschiedliche Topographie der erfindungsgemäßen Dichtung durch sektorale Pressungen mit örtlich unterschiedlichen Verpressungsdrücken erreicht.

Dabei bezeichnet das Bezugszeichen 38 in Figur 8 eine topografische Ausformung der Dichtung, um Bereiche mit unterschiedlicher Dichte und Elastizität zu erhalten.

In Figur 9 sind die Zonen höherer Elastizität 44, Zonen mittlerer Elastizität 42 und Zonen geringer Elastizität 40, durch eine topografische Ausformung der Dichtung angeordnet, um in der Dichtungsebene eine gestaffelte Dichtwirkung zu erzeugen.

In den Figuren 10 und 12 sind Kombinationen einer topografischen Ausformung und einer mosaikartigen Aneinanderlegung von Dichtungsmaterialien dargestellt.

In Figur 11 ist eine Funktionslage mit einer Sicke und einer entsprechenden topografischen Ausformung sowie mit einer Kombination von Dichtungs- bzw. Vlieslagen dargestellt.

Figuren 13 bis 15 zeigen Schnittansichten der erfindungsgemäßen Dichtung mit unterschiedlichen Ausprägungen für Formpressungen.

Figur 13 zeigt eine Schnittansicht der erfindungsgemäßen Dichtung mit einer als Kammprofil ausgeprägten Formpressung. Die Dichtung weist eine Stirnfläche 62 auf, die dem abzudichtenden Hohlraum zugewandt ist. In einem der Stirnfläche 62 angrenzenden Bereich ist die Dichtung mit einem versetzten Kammprofil 50 versehen. Das versetzte Kammprofil 50 weist Dichtungserhebungen 54 auf, die auf beiden Seiten der Dichtung gegeneinander versetzt sind. Der Übergang von der einer Reihe aufeinander folgender Vollsicken von Figur 12 zu einem versetzten Kammprofil 50 ist fließend, wobei das versetzte Kammprofil 50 Strukturen aufweisen kann, die kleiner sind als die Dicke der Dichtung. Die Linien 64 veranschaulichen den weiteren Verlauf der Dichtung, wenn angenommen wird, dass sie einen um die Achse 66 kreisförmigen Spalt bzw. Hohlraum abdichtet. Die in Figur 13 gezeigte Dichtung weist weiterhin eine Stahlblechlage 31 auf.

Figur 14 zeigt eine Schnittansicht einer erfindungsgemäßen Dichtung mit einer als Kammprofil ausgeprägten Formpressung. Die Dichtung weist wie die Dichtung von Figur 13 eine Stirnfläche 62 auf die dem abzudichtenden Hohlraum zugewandt ist. In einem der Stirnfläche 62 angrenzenden Bereich ist die Dichtung mit einem Kammprofil versehen, das im Gegensatz zu der Dichtung von Figur 13 nicht versetzt ist. Das Kammprofil weist Dichtungserhebungen 54 auf, die auf beiden Seiten der Dichtung im Wesentlichen übereinander liegen. Wie in Figur 13 veranschaulichen die Linien 64 den weiteren Verlauf der Dichtung, wenn angenommen wird, dass sie einen um die Achse 66 kreisförmigen Spalt bzw. Hohlraum abdichtet.

Die Dichtung ist in Figur 14 ebenfalls mit aufgesetzten Vlieslagen 54 dargestellt, die die Dichtungseigenschaften der Dichtung angrenzend an das Kammprofil gezielt verändern können.

Die Dichtungen von Figur 13 und 14 können auch mit Vlieslagen versehen sein, die sich auch in den Bereich des Kammprofils erstrecken. Es ist ebenfalls möglich das Kammprofil in Art einer Stufenpyramide aus übereinander gelegten Vlieslagen aufzubauen. Dieser mehrlagige Aufbau kann mit einer Formpressung kombiniert werden, die in den Figuren 13 und 14 dargestellten Ausführungsformen von Kammprofilen aufweisen. Dabei ist die Dichtung in einem Bereich durch in Reihen hintereinander angeordneter Dichtflächen ausgeführt. Die Dichtflächen bilden dabei im Schnitt eine kammartige Struktur.

In Figur 15 ist eine Funktionslage durch eine Formpressung mit einer doppelten Dichtungslippe 58 versehen. Die Stirnfläche 62 ist dabei als eine doppelte Dichtungslippe 58 ausgeführt. Die Dichtungslippen 58 werden bei einem an der Fläche 62 anliegenden Überdruck gegen die (nicht gezeigten) abzudichtenden Flächen gedrückt, was deren Dichtwirkung verstärkt. Wie in Figuren 13 und 14 veranschaulichen die Linien 64 den weiteren Verlauf der Dichtung die einen, um eine Achse 66 kreisförmigen Spalt bzw. Hohlraum abdichtet.

Die erfindungsgemäße Dichtung kann in einer Ausführungsform auch eingelegte Elastomerteile, keramische Werkstoffe und metallische Werkstoffe aufweisen. Die Dichtungen können Sickenringe, aufgelegte oder eingelegte Blechringe, ungesickte Blechringe und gebördelte Einfassungen sowohl innen als auch außen aufweisen.

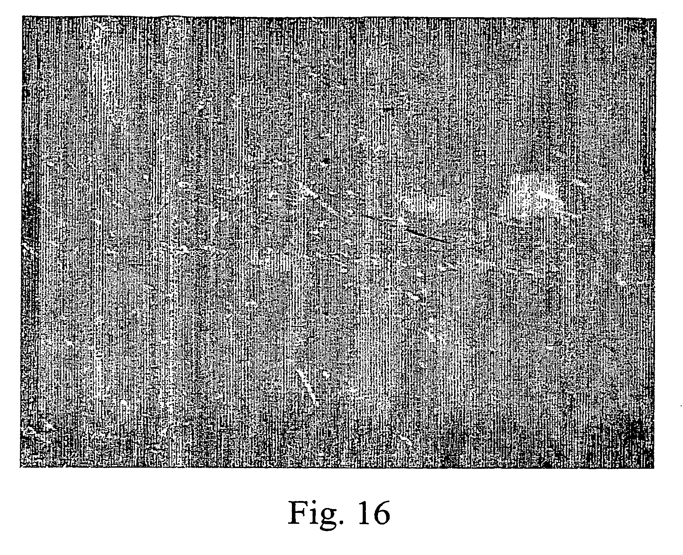

Figur 16 zeigt eine Aufsicht in 40-facher Vergrößerung (Lichtmikroskop) der HD-Variante (100% Dichte, d. h. 1,4 g/cm³) der erfindungsgemäßen Materials gemäß Beispiel 3 mit der unten beschriebenen Zusammensetzung.

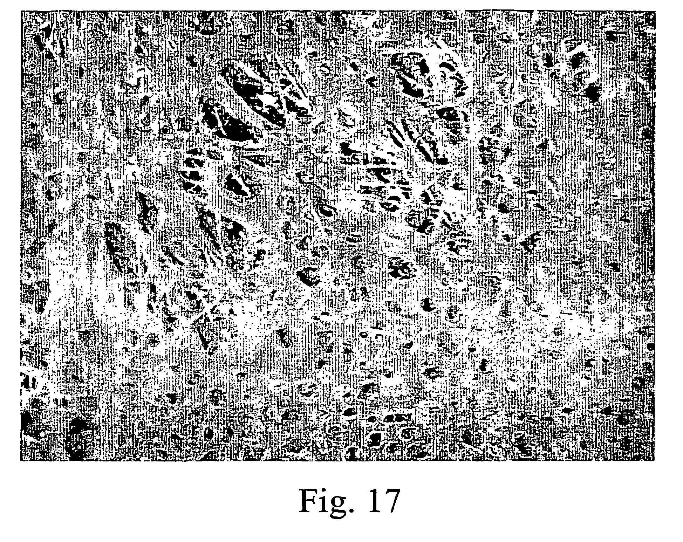

In Figur 17 wird eine Aufsicht in 40-facher Vergrößerung (Lichtmikroskop) der LD-Variante (65% Dichte, d. h. 0,9 g/cm³) des Materials von Beispiel 3 gezeigt.

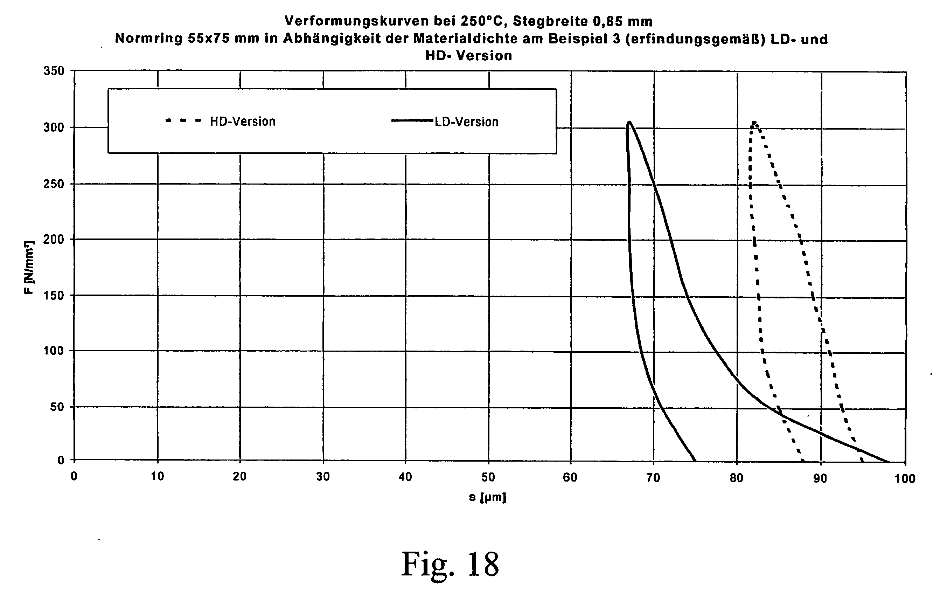

In Figur 18 werden Verformungskurven des erfindungsgemäßen Materials gemäß Beispiel 3 (erfindungsgemäß) am Beispiel der LD- und HD-Version mit verschiedenen Materialdichten, geprüft bei 250°C, gezeigt. Es wurden Normringe 55x75 mm, Stegbreiten von 0,75 mm bei 250°C getestet und die in Fig. 18 erhaltenen Kurven gezeigt. Die erfindungsgemäßen Materialien erfüllten dabei die Vorgaben hinsichtlich der Anpassungsfähigkeit und zeigen die Steuerbarkeit der Anpassungsfähigkeit über die Materialdichte.

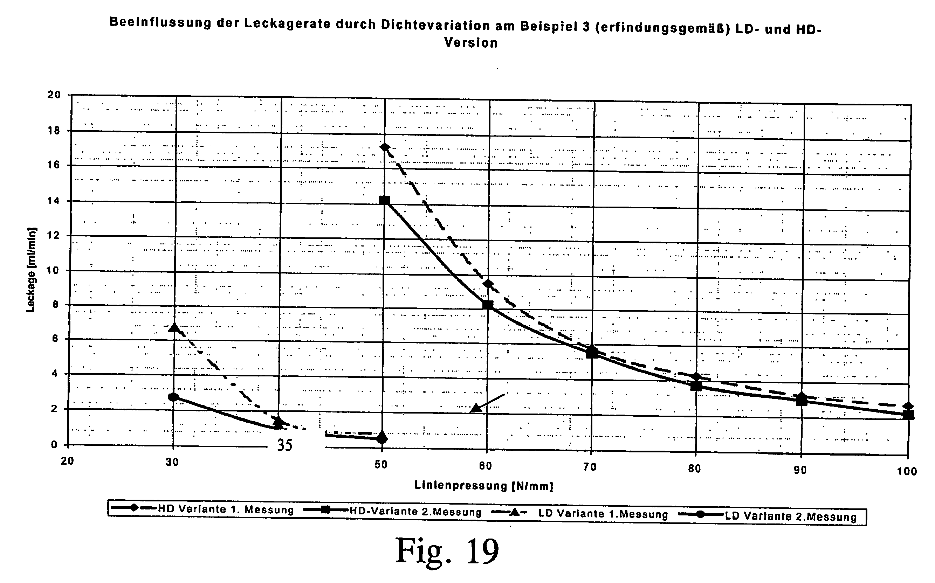

In Figur 19 wird die Reduzierung der Leckagerate durch Dichteerniedrigung am Beispiel von Beispiel 3 (Erfindung) in der HD- und LD-Version gezeigt. Die erfindungsgemäßen Muster erfüllten das Leckagekriterium mit N₂/l bar bei Rₘₐₓ. 12 µm. Beim Prüfling handelte sich wiederum um einen Normring mit 55x75 mm, gesickt.

### Beispiele 1 bis 11 (erfindungsgemäß): alle Angaben in Gew.-%

### Beispiel 1 Herstellung einer Faservliesmatte

75 % PEEK
10 % Carbonfasern
15 % Binder

### Beispiel 2 Herstellung einer Faservliesmatte

75 % PEEK
20 % Carbonfasern
5 % Binder

### Beispiel 3 Herstellung einer Faservliesmatte

75 % PEEK
20 % Polyaramid Faser 5 % Binder

### Beispiel 4 Herstellung einer Faservliesmatte

75 % PEEK
10 % Carbonfasern
5 % Binder
5 % PTFE Additiv

### Beispiel 5 Herstellung einer Faservliesmatte

75% PEEK
20% Polyaramid-Mikrofaser, d. h. Fasern mit einem Titer von unter 0,9 dtex
5% Binder

### Beispiel 6 Herstellung einer Faservliesmatte

85 % PEEK
15 % Binder (Fibrid)

### Beispiel 7 Herstellung einer Faservliesmatte

50 % PEEK
5 % Binder
45 % PTFE Additiv

### Beispiel 8 Herstellung einer Faservliesmatte

60% PPS (oxidiert)
30% Carbonfasern
10% Binder

### Beispiel 9 Herstellung einer Faservliesmatte

70% Polyamid 66 Fasern
15% Carbonfasern
15 % PVA Binder

### Beispiel 10 Herstellung von einer Faservliesmatte

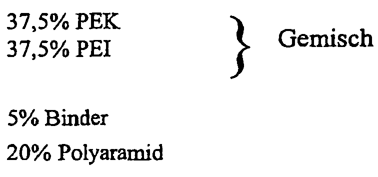

In den obigen Beispielen 1 bis 10 wurden exemplarisch Flächenmassen von 100 g/m² eingestellt.

### Beispiel 11 Herstellungsbeispiel für Flachdichtungswerkstoff (erfindungsgemäß)

Aus den Vliesen gemäß den obigen Beispielen 1 bis 10 wurden konsolidierte Faserverbundwerkstoffe erzeugt:
Einlagige Verpressung:
   Verpressungstemperatur: 250 °C bis 400 °C
   Verpressungszeit: 0,1 bis 15 min
   Flächenpressung: 0,3 N/mm² bis 15 N/mm²
   Resultierende Dicke: 86 -125µm
   Dichte: 0,8 g/cm³ bzw. 1,45 g/cm³

### Bezugszeichenliste:

- 2: Grenzfläche zum Stahlsubstrat
- 4: Hochleistungsthermoplast
- 6: Additive
- 8: CARBON-Fasern
- 10: Einbettungsmittel
- 12: Poren
- 14: E-Glas Verstärkungsfasern
- 16: Hochleistungsthermoplast
- 18: Zone höherer Dichte
- 20: Zone niedriger Dichte
- 22, 24, 26: Zonen mit mittlerer Dichte
- 30: Dichtungslage hoher Dichte
- 31: Stahlblechlage
- 32: Dichtungslage niedriger Dichte
- 34: Substratlage
- 36: Sicke
- 38: Topografie
- 40: Zone niedriger Elastizität
- 42: Zonen mittlerer Elastizität
- 44: Zonen höherer Elastizität
- 50: Kammprofil (versetzt)
- 52: Flachdichtung
- 54: Kammprofil
- 56: Vlieslagen
- 58: Dichtungslippe
- 60: Dichtungsmaterial
- 62: Kante zum Dichtungsraum
- 64: projizierte Kanten
- 66: Symmetrieachse

## Patentansprüche

1. Unter Anwendungsbedingungen von bis zu 330°C thermisch stabiler Hochleistungs-Flachdichtungswerkstoff, in Form einer faserverstärkten und/oder binderverstärkten Verbundfolie (composite film), mit einer Gesamtschichtdicke von 0,01 mm bis zu 3 mm, herstellbar durch Verpressung von wenigstens einem oder von mehreren Faservliesen, wobei die einzelnen Faservliese bzw. Faservliesmatten ein Flächengewicht von 8 bis 400 g/m², insbesondere von 50 bis 100 g/m², aufweisen, und die folgenden Komponenten enthalten:
(a) mindestens eine erste Faser aus einem Thermoplasten, ausgewählt aus der Gruppe, bestehend aus Polyetheretherketon (PEEK), Poly-p-phenylensufild (PPS), Polyetherimid (PEI), Polyetheramid (PEA), Polyamid (PA), Polysulfon (PSU), Polyvinylethersulfon (PPSU), Polyethersulfon (PES), Polyaryletherketon (PAEK), Polyetherketon (PEK), Polyoxymethylen (POM) und Gemischen davon, oder aus der Gruppe der metallischen Schmelzfasern mit einem Schmelz- oder Erweichungspunkt der Metallfasern von unter 450°C, als Schmelzfaser, in einem Gewichtsanteil von 30 bis 97 %, bezogen auf die gesamte Formulierung des Faservlieses, und einer mittleren Faserlängenverteilung der Schmelzfaser im Bereich von 0,1 mm bis 30 mm,
(b) gegebenenfalls mindestens eine zweite Verstärkungsfaser, ausgewählt aus der Gruppe, bestehend aus Glasfasern, Aramidfasern, Carbonfasern, Keramikfasern, oxidierten Polyphenylensulfid-(PPSO₂)-Fasern, Metallfasern, Polyimidfasern, Polybenzimidazolfasern, Polybenzoxazolfasern und Naturfasern und Gemischen davon, dessen Temperaturstabilität größer ist als die der Schmelzfaser, mit einem Gewichtsanteil von 3 bis 67 %, bezogen auf die gesamte Formulierung des Faservlieses und einer mittleren Faserlängenverteilung der Verstärkungsfaser im Bereich von 0,1 mm bis 30 mm, mit der Maßgabe, dass die mittlere Faserlängenverteilung der Schmelzfaser kleiner ist als die der Verstärkungsfaser,
(c) bis zu 60 Gewichtsprozent, insbesondere 3 bis 10 Gew.-%, eines Binders, bezogen auf die gesamte Formulierung des Faservlieses,
wobei die Komponenten (a), (b) und (c) 100 Gew.-% ergeben,
sowie
(d) zusätzlich zu 100 Gew.-% der Komponenten (a), (b) und (c) gegebenenfalls 0,1 bis 80 Gew.-Teile von üblichen Additiven und Zuschlagsstoffen, ausgewählt aus Fasern, Fibrillen, Fibriden, nanoskaligen Zusätzen im Größenbereich von 5 bis 300 nm, folienartigen Strukturen, Pulpe, metallischen oder keramischen Pulvern, anorganischen Mikrohohlkugeln mit einer durchschnittlichen Partikelgröße von 10 bis 300 µm und einer Druckfestigkeit von 3,5 bis 70 MPa und Mischungen hiervon, wobei fibridartige Zusätze bevorzugt sind,
unter Druck von 0,05 bis 15 N/mm² und einer Temperatur von bis zu 450 °C, die über dem Schmelzpunkt oder Erweichungspunkt der Schmelzfaser liegt, zu einer verstärkten Verbundfolie (composite film) mit einer Gesamtschichtdicke von 0,01 mm bis zu 3 mm.

2. Flachdichtungswerkstoff gemäß Anspruch 1, **dadurch gekennzeichnet, dass** die Schmelzfaser ausgewählt ist aus der Gruppe aus PPS, PEI, PEK und PEEK und deren Gemischen und aus der Gruppe der metallischen Schmelzfasem.

3. Flachdichtungswerkstoff gemäß einem der Ansprüche 1 oder 2, **dadurch gekennzeichnet, dass** der Binder (c) faserig und/oder folienartig und/oder fibridartig ist und insbesondere eine Dispersion ist und Verbindungen enthält, die auf Polyacrylat, Polyvinylacetat, Ethylenvinylacetat, Polyvinylalkohol, Polyurethanen, Polyaramiden, (Co)Polyolefinen, Harzen aus der Gruppe aus Melaminharzen, Phenolharzen, Polyurethanharzen, oder Mischungen hiervon, basieren.

4. Flachdichtungswerkstoff gemäß Anspruch 1, **dadurch gekennzeichnet, dass** als Additive aus dem Stand der Technik bekannte tribologisch wirksame Zuschlagsstoffe wie PTFE-Fasern oder -Pulver, Polyimidfasern, Polyaramidfasern oder -folien und/oder -fibride, Kohlenstoffnanofasern oder Pulver im Flachdichtungswerkstoff enthalten sind.

5. Flachdichtungswerkstoff gemäß einem der Ansprüche 1 bis 4, **dadurch gekennzeichnet, dass** der Flachdichtungswerkstoff nach Verpressung bzw. Konsolidierung eine Dichte von 0,25 g/cm³ bis 4 g/cm³, insbesondere 0,75 g/cm³ bis 1,6 g/cm³, aufweist.

6. Flachdichtungswerkstoff gemäß einem der Ansprüche 1 bis 5, **dadurch gekennzeichnet, dass** die Schmelzfaser, die Additive und die Verstärkungsfaser homogen verteilt in der Faservliesmatte vorliegen.

7. Flachdichtungswerkstoff gemäß einem der Ansprüche 1 bis 6, **dadurch gekennzeichnet, dass** er eine gezielte Inhomogenität im Querschnitt aufweist.

8. Dichtung, insbesondere Zylinderkopfdichtung, **dadurch gekennzeichnet, dass** sie aus einem Flachdichtungswerkstoff gemäß einem der vorhergehenden Ansprüche 1 bis 7 besteht und gegebenenfalls auf mindestens ein flächiges Substrat, insbesondere ein metallisches Substrat, oder ein Gewebe oder Gestrick, oder Papier oder eine Platte, aufgebracht ist.

9. Dichtung gemäß Anspruch 8, **dadurch gekennzeichnet, dass** der Flachdichtungswerkstoff zwischen zwei Substrate, insbesondere zwei Gewebesubstrate, eingebettet ist.

10. Dichtung gemäß Anspruch 8, **dadurch gekennzeichnet, dass** sie aus einem Laminat aus mehreren aus auf Substraten aufgebrachten Flachdichtungswerkstoffen besteht.

11. Dichtung gemäß einem der Ansprüche 8 bis 10, **dadurch gekennzeichnet, dass** sie eine örtlich unterschiedliche Dichte bzw. eine örtlich unterschiedliche topografische Oberfläche bzw. Dicke aufweist.

12. Dichtung gemäß Anspruch 11, **dadurch gekennzeichnet, dass** die unterschiedliche Elastizität und Plastizität durch topografisch gestaltete Pressplatten oder partielle, sektorale Pressungen mit örtlich unterschiedlichen Verpressungsdrücken erreicht werden.

13. Dichtung gemäß Anspruch 8 bis 12, **dadurch gekennzeichnet, dass** sie eine örtlich unterschiedliche topografische Oberfläche aufweist, die über eine Materialauflage erzielt worden ist, die mit der Dichtung verklebt oder verschweißt ist, insbesondere mittels Lasertechnologie verschweißt ist.

14. Dichtung gemäß einem der vorhergehenden Ansprüche 8 bis 13, **dadurch gekennzeichnet, dass** die unterschiedliche Elastizität und Plastizität durch unterschiedliche Faser- und/oder Füllstoffgehalte innerhalb der Dichtflächen eingestellt worden ist.

15. Dichtung gemäß einem der Ansprüche 8 bis 14, **dadurch gekennzeichnet, dass** die unterschiedliche Elastizität und Plastizität sektoral über die Dichtfläche verteilt ist und durch mosaikartigen Zusammenbau von den Faservliesmatten unterschiedlicher Elastizität und Plastizität erreicht wird.

16. Dichtung gemäß einem der Ansprüche 8 bis 15, **dadurch gekennzeichnet, dass** der für die Dichtung eingesetzte Flachdichtungswerkstoff unterschiedliche Elastizität und Plastizität aufweist und die Dichtung sowohl Verbundwerkstoffe, eingelegte Elastomerteile, keramische Werkstoffe als auch metallische Werkstoffe, wie Sickenringe, aufgelegte oder eingelegte Blechringe, ungesickte Blechringe, gebördelte Einfassungen oder aufgeschweißte, aufgeklebte verstärkte Folien enthält.

17. Dichtung gemäß einem der Ansprüche 8 bis 16, **dadurch gekennzeichnet, dass** in einem separaten Arbeitsgang durch Sprühen, Tiefdruck, Siebdruck Additive örtlich begrenzt auf die Faservliese aufgebracht worden sind.

18. Dichtung gemäß einem der Ansprüche 8 bis 17, **dadurch gekennzeichnet, dass** in einem separaten Arbeitsgang durch Sprühen, Tiefdruck, Siebdruck Additive örtlich begrenzt auf die verstärkte Folie aufgebracht worden sind.

19. Dichtung gemäß einem der Ansprüche 8 bis 18, **dadurch gekennzeichnet, dass** in einem separaten Arbeitsgang durch Sprühen, Tiefdruck, Siebdruck oder durch Lasertechnologie Additive örtlich begrenzt auf die Dichtung aufgebracht worden sind.

20. Dichtung gemäß einem der Ansprüche 8 bis 19, **dadurch gekennzeichnet, dass** die Dichtung eine durch Formpressen erzeugte Dichtungsgeometrie aufweist.

21. Dichtung gemäß einem der Ansprüche 8 bis 20, **dadurch gekennzeichnet, dass** die Dichtung ein Kammprofil zur Abdichtung aufweist.

22. Dichtung gemäß einem der vorhergehenden Ansprüche 8 bis 21, **dadurch gekennzeichnet, dass** sie Sensoren oder Transponder enthält, die über den Pressvorgang eingearbeitet worden sind.

## Claims

1. High-performance flat sealing material thermally stable under application conditions up to 330°C, in the form of a fibre-reinforced and/or binder reinforced composite foil (composite film), having a total layer thickness of from 0.01 mm to 3 mm, producible by pressing at least one or more fibre webs, wherein the individual fibre webs or fibre mats have a weight per unit area of from 8 to 400 g/m², in particular of from 50 to 100 g/m², and comprise the following components:
(a) at least one first fibre comprising a thermoplastic, selected from the group consisting of polyether ether ketone (PEEK), poly-p-phenylene sulphide (PPS), polyetherimide (PEI), polyetheramide (PEA), polyamide (PA), polysulphone (PSU), polyvinyl ether sulphone (PPSU), polyether sulphone (PES), polyaryl ether ketone (PAEK), polyether ketone (PEK), polyoxymethylene (POM) and mixtures thereof, or from the group of metallic melting fibres having a melting point or softening point of the metallic fibres of below 450 °C, as melting fibre, in a proportion by weight of from 30 to 97 %, based on the total formulation of the fibre web, and having an average fibre length distribution of the melting fibre in the range of from 0.1 mm to 30 mm,
(b) optionally at least one second reinforcing fibre, selected from the group consisting of glass fibres, aramid fibres, carbon fibres, ceramic fibres, oxidized polyphenylene sulphide (PPSO₂) fibres, metal fibres, polyimide fibres, polybenzimidazole fibres, polybenzoxazole fibres and natural fibres and mixtures thereof, the thermal stability of which is greater than that of the melting fibre, in a proportion by weight of from 3 to 67 %, based on the total formulation of the fibre web, and having an average fibre length distribution of the reinforcing fibre in the range of from 0.1 mm to 30 mm, with the proviso that the average fibre length distribution of the melting fibre is smaller than that of the reinforcing fibre,
(c) up to 60 per cent by weight, in particular from 3 to 10 % by weight, of a binder, based on the total formulation of the fibre web,
wherein the components (a), (b) and (c) summing in each case to 100 % by weight,
and
(d) in addition to 100 % by weight of the components (a), (b) and (c), optionally from 0.1 to 80 parts by weight of customary additives and compounding materials selected from fibres, fibrils, fibrids, nanoscale additives in the size range of from 5 to 300 nm, foil-like structures, pulp, metallic or ceramic powders, inorganic hollow microspheres having an average particle size of from 10 to 300 µm and a compressive strength of from 3.5 to 70 MPa and mixtures thereof, wherein fibrid-like additives are being preferred,
under pressure of from 0.05 to 15 N/mm² and a temperature of up to 450°C which is above the melting point or the softening point of the melting fibre to give a reinforced composite foil (composite film) having a total layer thickness of from 0.01 mm to 3 mm.

2. Flat sealing material according to claim 1, **characterized in that** the melting fibre is selected from the group of PPS, PEI, PEK and PEEK and their mixtures and from the group of metallic melting fibres.

3. Flat sealing material according to claim 1 or 2, **characterized in that** the binder (c) is fibrous and/or foil-like and/or fibrid-like and in particular is a dispersion and comprises compounds which are based on polyacrylate, polyvinyl acetate, ethylene vinyl acetate, polyvinyl alcohol, polyurethanes, polyaramids, (co)polyolefins, resins from the group of melamine resins, phenol resins, polyurethane resins, or mixtures thereof.

4. Flat sealing material according to claim 1, **characterized in that** tribologically active compounding materials known from the prior art, such as PTFE fibres or powders, polyimide fibres, polyaramid fibres or foils and/or fibrids, carbon nanofibres or powders, are comprised as additives in the flat sealing material.

5. Flat sealing material according to any one of claims 1 to 4, **characterized in that** the flat sealing material after pressing or consolidation has a density of from 0.25 g/cm³ to 4 g/cm³, in particular from 0.75 g/cm³ to 1.6 g/cm³.

6. Flat sealing material according to any one of claims 1 to 5, **characterized in that** the melting fibre, the additives and the reinforcing fibre are present in homogeneous distribution in the fibre mat.

7. Flat sealing material according to any one of claims 1 to 6, **characterized in that** it has a specific inhomogeneity in cross-section.

8. Seal, in particular cylinder head gasket, **characterized in that** it consists of a flat sealing material according to any one of the preceding claims 1 to 7 and is optionally applied to at least one planar substrate, in particular a metallic substrate, or a woven fabric or knitted fabric, or paper or a plate.

9. Seal according to claim 8, **characterized in that** the flat sealing material is embedded between two substrates, in particular two woven fabric substrates.

10. Seal according to claim 8, **characterized in that** it consists of a laminate comprising a plurality of flat sealing materials applied to substrates.

11. Seal according to any one of claims 8 to 10, **characterized in that** it has a density varying from place to place or a topographical surface or thickness varying from place to place.

12. Seal according to claim 11, **characterized in that** the different elasticity and plasticity are achieved by topographically designed press plates or partial, sectoral pressings with compression pressures varying from place to place.

13. Seal according to claim 8 to 12, **characterized in that** it has a topographical surface which varies from place to place which has been achieved by means of a top material layer which is adhesively bonded or welded to the seal, in particular is welded by means of laser technology.

14. Seal according to any one of the preceding claims 8 to 13, **characterized in that** the different elasticity and plasticity has been achieved by different fibre and/or filler contents within the sealing surfaces.

15. Seal according to any one of claims 8 to 14, **characterized in that** the different elasticity and plasticity is distributed in sectors over the sealing surface and is achieved by mosaic-like assembly of the fibre mats of different elasticity and plasticity.

16. Seal according to any one of claims 8 to 15, **characterized in that** the flat sealing material used for the seal has different elasticity and plasticity and the seal comprises both composite materials, inserted elastomer parts, ceramic materials and metallic materials, such as bead rings, sheet metal rings placed on top or inserted, sheet metal rings without beading, flanged borders or reinforced foils which have been welded on or applied by adhesive bonding.

17. Seal according to any one of claims 8 to 16, **characterized in that** additives have been applied in a localised manner to the fibre webs in a separate operation by spraying, gravure printing, screen printing.

18. Seal according to any one of claims 8 to 17, **characterized in that** additives have been applied in a localised manner to the reinforced foil in a separate operation by spraying, gravure printing, screen printing.

19. Seal according to any one of claims 8 to 18, **characterized in that** additives have been applied in a localised manner to the seal in a separate operation by spraying, gravure printing, screen printing or by laser technology.

20. Seal according to any one of claims 8 to 19, **characterized in that** the seal has a sealing geometry produced by compression moulding.

21. Seal according to any one of claims 8 to 20, **characterized in that** the seal has a comb profile for sealing.

22. Seal according to any one of the preceding claims 8 to 21, **characterized in that** it comprises sensors or transponders which have been incorporated by means of the pressing process.

## Revendications

1. Matériau haute performance pour joint plat, présentant une stabilité thermique dans des conditions d'utilisation jusqu'à 330°C, sous la forme d'un film composite (composite film) renforcé par fibres et/ou par agent de liaison, d'une épaisseur de couche totale de 0,01 mm à 3 mm, pouvant être fabriqué par compression d'au moins un ou de plusieurs voile(s) de fibres, chaque voile de fibres ou natte de voiles de fibres présentant un grammage de 8 à 400 g/m², notamment de 50 à 100 g/m² et contenant les composants suivant :
(a) au moins une première fibre en une matière thermoplastique, choisie dans le groupe composé des polyétheréthercétones (PEEK), des polysulfures de phénylène (PPS), des polyétherimides, (PEI), des polyétheramides (PEA), des polyamides (PA) des polysulfones (PSU), des polyphénylène-sulfones (PPSU), des polyéthersulfones (PES), des polyaryléthercétones (PAEK), des polyéthercétones (PEK), du polyoxyméthylène et de mélanges de ces derniers ou dans le groupe des fibres métalliques fusibles, avec un point de fusion ou un point de ramollissement des fibres métalliques inférieur à 450°C, en tant que fibre fusible, dans une part en poids des 30 à 97 % en poids en rapport à la formulation totale du voile de fibres et avec une répartition moyenne des longueurs de fibres de la fibre fusible de l'ordre de 0,1 mm à 30 mm,
(b) le cas échéant, au moins une deuxième fibre de renfort, choisie dans le groupe comprenant les fibres de verre, les fibres d'aramide, les fibres de carbone, les fibres de céramique, les fibres de polysulfure de phénylène (PPSO₂) oxydées, les fibres métalliques, les fibres de polyimide, les fibres de polybenzimidazole, les fibres de polybenzoxazole et des fibres naturelles, ainsi que des mélanges de ces dernières, dont la stabilité thermique est supérieure à celle de la fibre fusible, avec une part en poids de 3 à 67 %, en rapport à la formulation totale du voile de fibres et avec une répartition moyenne des longueurs de la fibre de renfort de l'ordre de 0,1 à 30 mm, avec le critère que la longueur moyenne de répartition des fibres de la fibre fusible est inférieure à celle de la fibre de renfort,
(c) jusqu'à 60 pour cent en poids, notamment de 3 à 10 % en poids d'un agent de liaison, en rapport à la formulation totale du voile de fibres,
les composants (a), (b) et (c) totalisant 100 % en poids,
et
(d) en supplément de 100 % en poids des composants (a), (b) et (c), le cas échéant de 0,1 à 80 parts en poids d'additifs et de matières de charges usuelles, choisis parmi les fibres, les fibrilles, les fibrides, les adjuvants nanoscaliques, de l'ordre de grandeur de 5 à 300 nm, les structures de type film, les pulpes, les poudres métalliques ou céramiques, les microsphères inorganiques, avec une grandeur moyenne de particules de 10 à 300 µm et une résistance à la pression de 3,5 à 70 MPa et des mélanges de ces derniers, des adjuvants de type fibrides étant préférés,
sous une pression de 0,05 à 15 N/mm² et à une température de jusqu'à 450°C qui est supérieure au point de fusion ou au point de ramollissement de la fibre fusible en un film composite (composite film) renforcé, d'une épaisseur totale de 0,01 mm à 3 mm.

2. Matériau pour joint plat selon la revendication 1, **caractérisé en ce que** la fibre fusible est choisie dans le groupe des PPS, PEI, PEK et PEEK et de leur mélanges et dans le groupe des fibres métalliques fusibles.

3. Matériau pour joint plat selon l'une quelconque des revendications 1 ou 2, **caractérisé en ce que** l'agent de liaison (c) est de type fibre et/ou film et est notamment une dispersion et contient des composés basés sur le polyacrylate, le polyacétate de vinyle, l'éthylène-acétate de vinyle, l'alcool de polyvinyle, les polyuréthanes, les polyaramides, les (co-)polyoléfines, les résines du groupe des résines de mélamine, des résines de phénol, des résines de polyuréthane ou de mélanges de ces derniers.

4. Matériau pour joint plat selon la revendication 1, **caractérisé en ce qu'**en tant qu'additifs selon l'art antérieur, des produits adjuvants tels que des fibres ou de la poudre de PTFE, des fibres de polyimides, des fibres ou films et/ou fibrides de polyaramides, des nanofibres ou de la poudre de carbone sont contenus dans le matériau pour joint plat.

5. Matériau pour joint plat selon l'une quelconque des revendications 1 à 4, **caractérisé en ce qu'**après la compression ou la consolidation, le matériau pour joint plat présente une densité de 0,25g/cm³ à 4g/cm³, notamment de 0,75 g/cm³ à 1,6 g/cm³.

6. Matériau pour joint plat selon l'une quelconque des revendications 1 à 5, **caractérisé en ce que** la fibre fusible, les additifs et la fibre de renfort se présentent en répartition homogène dans une natte en voile de fibres.

7. Matériau pour joint plat selon l'une quelconque des revendications 1 à 6, **caractérisé en ce qu'**il présente un manque d'homogénéité ciblé dans la section transversale.

8. Joint, notamment joint pour culasse de cylindre, **caractérise en ce qu'**il est constitué d'un matériau pour joint plat selon l'une quelconque des revendications précédentes 1 à 7 et qu'il est appliqué le cas échéant sur au moins un substrat plan, notamment sur un substrat métallique ou un tissu ou tricotage ou sur du papier ou une plaque.

9. Joint selon la revendication 8, **caractérisé en ce que** le matériau pour joint plat est noyé entre deux substrats, notamment deux substrats en tissu.

10. Joint selon la revendication 8, **caractérisé en ce qu'**il est constitué d'un stratifié de plusieurs matériaux pour joint plat appliqués sur des substrats.

11. Joint selon l'une quelconque des revendications 8 à 10, **caractérisé en ce qu'**il présente un densité localement différente ou une surface topographique ou épaisseur localement différente.

12. Joint selon la revendication 11, **caractérisé en ce que** l'élasticité et la plasticité différentes sont obtenues par des plateaux de serrage à conception topographique ou par des compressions sectorielles partielles à des pressions de compression localement différentes.

13. Joint selon la revendication 8 à 12, **caractérisé en ce qu'**il présente une surface à topographie localement différente qui a été obtenue par revêtement de matière qui est collée ou soudée avec le joint, notamment soudée par technologie au laser.

14. Joint selon l'une quelconque des revendications précédentes 8 à 13, **caractérisé en ce que** l'élasticité et la plasticité différentes ont été réglées par différentes teneurs en fibres et/ou en matières de charge à l'intérieur des surfaces d'étanchéité.

15. Joint selon l'une quelconque des revendications 8 à 14, **caractérisé en ce que** l'élasticité et la plasticité différentes sont sectoriellement répandues sur la surface d'étanchéité et obtenues par un assemblage en mosaïque de nattes de voile de fibres de différentes élasticité et plasticité.

16. Joint selon l'une quelconque des revendications 8 à 15, **caractérisé en ce que** le matériau pour joint plat mis en oeuvre pour le joint présente une élasticité et une plasticité différentes et **en ce que** le joint contient aussi bien des matériaux composites, des pièces en élastomère insérées, des matériaux céramiques que des matériaux métalliques, tels que des bagues de nervurage, des bagues en tôle posées ou insérées, des bagues en tôles non moulurées, des bordures repliées ou des films renforcés appliqués par soudage ou collage.

17. Joint selon l'une quelconque des revendications 8 à 16, **caractérisé en ce que** dans une étape de travail séparée, des additifs ont été appliqués de manière localement limitée sur les voiles de fibres par vaporisation, par héliogravure, par sérigraphie.

18. Joint selon l'une quelconque des revendications 8 à 17, **caractérisé en ce que** dans une étape de travail séparée, des additifs ont été appliqués de manière localement limitée sur le film renforcé par vaporisation, par héliogravure, par sérigraphie.

19. Joint selon l'une quelconque des revendications 8 à 18, **caractérisé en ce que** dans une étape de travail séparée, des additifs ont été appliqués de manière localement limitée sur le joint par vaporisation, par héliogravure, par sérigraphie ou par technologie au laser.

20. Joint selon l'une quelconque des revendications 8 à 19, **caractérisé en ce que** le joint présente une géométrie de joint créée par moulage par compression.

21. Joint selon l'une quelconque des revendications 8 à 20, **caractérisé en ce que** le joint présente un profil en peigne pour assurer l'étanchéité.

22. Joint selon l'une quelconque des revendications précédentes 8 à 21, **caractérisé en ce qu'**il contient des capteurs ou des transpondeurs qui ont été incorporés pendant le processus de compression.
